**Europäisches Patentamt**

**European Patent Office**

**Office européen des brevets**

(19)

(11) Veröffentlichungsnummer : **0 327 941 B1**

(12)

# EUROPÄISCHE PATENTSCHRIFT

(45) Veröffentlichungstag der Patentschrift :
**13.05.92 Patentblatt 92/20**

(51) Int. Cl.$^5$ : **A01C 17/00, A01C 15/00**

(21) Anmeldenummer : **89101698.2**

(22) Anmeldetag : **01.02.89**

(54) **Schleuderdüngerstreuer.**

(30) Priorität : **12.02.88 DE 3804412**

(43) Veröffentlichungstag der Anmeldung :
**16.08.89 Patentblatt 89/33**

(45) Bekanntmachung des Hinweises auf die
Patenterteilung :
**13.05.92 Patentblatt 92/20**

(84) Benannte Vertragsstaaten :
**DE FR GB NL**

(56) Entgegenhaltungen :
**EP-A- 0 134 603**
**DE-B- 1 180 562**
**FR-A- 2 450 551**
**US-A- 2 594 084**

(73) Patentinhaber : **Amazonen-Werke H. Dreyer
GmbH & Co. KG
Am Amazonenwerk 9-13
W-4507 Hasbergen-Gaste (DE)**

(72) Erfinder : **Dreyer, Heinz, Dipl.-Ing. Dr.
Am Amazonenwerk 7
W-4507 Hasbergen (DE)**

EP 0 327 941 B1

Jouve, 18, rue Saint-Denis, 75001 PARIS

## Beschreibung

Die Erfindung betrifft einen Schleuderdüngerstreuer gemäß Oberbegriff des Patentanspruches 1,

Durch die amerikanische Patentschrift 25 94 084 ist ein Schleuderdüngerstreuer gemäß des Oberbegriffes des Patentanspruches 1 bekannt. Dieser Schleuderdüngerstreuer weist einen Rahmen auf, der über eine Tragvorrichtung an einer. Ackerschlepper angebaut ist. Weiterhin weist der Schleuderdüngerstreuer einen Vorratsbehälter mit zwei um etwa aufrechte Achsen rotierend angetriebene Schleuderscheiben auf, denen der Dünger über einstellbare bzw, regelbare Dosiereinrichtungen zugeführt wird. Die Schleuderscheiben sind um einen Winkel geneigt einstellbar am Rahmen des Schleuderdüngerstreuers anzuordnen, wobei die Schleuderscheiben oder einige der Schleuderscheiben bzw. deren Rotationsachse um einen Winkel nach hinten einstellbar sind. Durch die Neigung der Schleuderscheiben wird die Wurfweite der Streupartikel nach hinten verkürit. Die Schleuderscheibenantriebswelle ist in einem Lager, welches an einer Längstraverse befestigt ist, drehbar gelagert. Diese Längstraverse ist auf der Vorderseite und auf der Rückseite jeweils mittels Schrauben am Rahmen des Schleuderdüngerstreuers befestigt. Diese Schrauben fassen in Langlöcher von Winkelstücken, welche am Rahmen des Schleuderdüngerstreuers angeschraubt sind. Durch Verschwenken der Längstraverse kann die Neigung der Schleuderscheiben eingestellt werden. Diese schwenkbare Anordnung der Schleuderscheiben gegenüber dem Rahmen des Schleuderdüngerstreuers ist relativ aufwendig.

Ein weiterer Schleuderdüngerstreuer ist durch den Prospekt "AMAZONE ZA-U Die konsequente Weiterentwicklung der AMAZONE-Zentrifugalstreuer-Technik mit dem Druckvermerk D518*5.85 bekannt. Bei diesen, an den Dreipunktkraftheber eines Ackerschleppers anbaubaren Schleuderdüngerstreuer werden zur Erzielung unterschiedlicher Arbeitsbreiten verschiedene Streuscheiben auf die Schleuderscheibenantriebswellen aufgesetzt, deren Neigung unter Berücksichtigung der jeweils auszustreuenden Düngemittel, ihrer Streuguteigenschaften und der jeweils gewünschten Arbeitsbreite in verschiedenen Neigungswinkeln-einstellbar sind. Hierzu wird jedoch der gesamte Tragrahmen, an dem der Vorratsbehälter und die Streuorgane befestigt sind, also der gesamte Schleuderstreuer nach vorn oder .hinten verschwenkt. Die jeweiligen Anbauhöhen für die vorderen und hinteren Schleuderscheibenkanten werden hierbei einer Streutabelle entnommen, wodurch sich die jeweilige Neigung der Streuscheiben, d.h. des kompletten Streuers ergibt. Durch dieses nach vorn oder hinten Verschwenken des gesamten Schleuderdüngerstreuers werden die Schleuderscheiben mit unterschiedlichen Neigungswinkeln gegenüber der Bodenoberfläche eingestellt, so daß sich für alle handelsüblichen Düngersorten auf einfachste Weise die jeweils gewünschte Arbeitsbreite einstellen läßt. Als Nachteil ist bei diesem Schleuderdüngerstreuer das relativ weite nach hinten Abschleudern der Düngemittelpartikel, besonders bei großen Arbeitsbreiten von 24m und mehr, anzusehen. Dadurch, daß die Düngemittel von den Schleuderscheiben relativ weit nach hinten, d.h., hinter den Schleuderstreuer geworfen werden, ist es nicht möglich, die Randbereiche des Feldes vom Vorgewende ausreichend exakt auszustreuen. Weiterhin kann es beim nach hinten geneigten Schleuderstreuer durchaus möglich sein, daß die Düngemittelpartikel im äußeren Bereich des von den abgeschleuderten Düngemitteln gebildeten Streubildes zu weit nach vorn geschleudert werden, wodurch ebenfalls ein "tiefes Streubild" entsteht und ein ausreichend exaktes Ausstreuen der Ackerflächen am Vorgewende unmöglich macht.

Der Erfindung liegt die Aufgabe zugrunde, eine sehr einfache Ausbildung der schwer schwenkbaren Aushängung der Schleuderscheiben am Rahmen zu erreichen.

Diese Aufgabe wird erfindungsgemäß durch den kennzeichnenden Teil des Patentanspruches 1 gelöst.

Infolge dieser Maßnahme wird eine sehr einfache Ausbildung der verschwenkbaren Aufhängung der Schleuderscheiben am Rahmen erreicht. Auf einfachste Weise wird der Schleuderdüngerstreuer so verbessert, daß bei großen Arbeitsbreiten von 24m / 36m und mehr die Wurfweite der Düngerpartikel nach hinten erheblich reduziert wird, ohne daß dann der Dünger im Außenbereich zu weit nach vorn geworfen wird; mit anderen Worten; das Streubild soll in Fahrtrichtung "zusammengeschoben" werden. Der Streusektor oder die Streusektoren sollen auf einen gerade und im rechten Winkel zur Fahrtrichtung verlaufenden schmalen Bereich liegen.

Somit wird für die unterschiedlichsten Arbeitsbreiten oder Streustoffeigenschaften die Wurfweite der Streupartikel nach hinten wesentlich verkürzt, so daß das Streubild in Fahrtrichtung "zusammengeschoben" wird. Hierdurch ist es nun möglich, auch die Mitten- und Randbereiche des Feldes am Vorgewende exakt auszustreuen, so daß dem Boden bzw. den Pflanzen auch in diesen Bereichen eine gleichmäßige Düngergabe zugeführt wird. Die Neigung der Schleuderscheiben wird also insbesondere nur zum Verkürzen der Wurfweite nach hinten - also zum Zusammenschieben des Streubildes - herangezogen, eine Beeinflussung der Arbeitsbreite bzw. ein Einwirken auf die jeweiligen Streustoffeigenschaften findet hierdurch im wesentlichen nicht statt. Da die Anpassung an verschiedene Arbeitsbreiten oder Streustoffeigenschaften lediglich durch Ändern der Schaufelstellungen des Aufgabepunktes, durch Wechseln der Streuscheiben bzw. der Drehzahlen oder der Scheibenhöhe über dem Erdboden vorgenommen wird, bleibt die nach hinten verkürzte Wurfweite der Streupartikel immer gleich und es wird verhindert, daß der Dünger im Außenbereich zu weit nach vorn geworfen wird. Dieses

2

Reduzieren der Wurfweite nach hinten, durch die Neigung der Streuscheiben, ruft besonders bei großen Arbeitsbreiten eine überraschende Wirkung hinsichtlich einer erheblichen Reduzierung des Windeinflusses auf die auszustreuenden Düngemittelpartikel hervor, da sie, bedingt durch ihre verkürzte Flugbahn, nicht vom Wind abgetrieben werden und das Streubild somit nicht entsprechend der jeweiligen Windrichtung verlagert wird. Die Düngemittelpartikel werden in Richtung des Bodens ausgeworfen bzw. wiesen sie noch beim Auftreffen auf den Boden eine ausreichende kinetische Energie auf, so daß die Windanfälligkeit und der Windeinfluß erheblich reduziert wird.

Durch die DE-OS 20 31 557 ist bereits eine Vorrichtung zum Streuen von körnigem Streugut, bei der am rückwärtigen Ende eines mit einem Vorratsbehälter und einem Zubringförderer versehenen Fahrzeuges zwei rotierfähige Streuteller gelagert sind, denen das Streugut über einen Zubringer zugeführt wird, bekannt. Der Zubringer ist als ein an der Fahrzeugrückseite quer zur Fahrtrichtung sich erstreckender, mit einer von der Mitte nach beiden Seiten fördernden Schnecke versehener Förderkanal ausgebildet, an dessen stirnseitigem Auslauf der einzelne Streuteller angeschlossen ist. Hierdurch wird der Abstand der Streuteller wesentlich vergrößert, so daß sich ohne Vergrößerung des Streufahrzeuges eine größere Streubreite erreichen läßt. Die Streuteller dieser Streuvorrichtung sind in mehreren Ebenen, vorzugsweise längs und quer zur Fahrtrichtung, schwenkbar ausgebildet. Diese Verstellbarkeit der Streuteller ermöglicht, daß man nicht nur die Streubreite, sondern auch die Streutiefe und insbesondere die Streurichtung einstellen kann.

Dieser Offenlegungsschrift ist an keiner Stelle ein Hinweis auf eine gleichzeitige Verlagerung des Aufgabepunktes des Streumaterials auf den jeweiligen Streuteller bei Veränderung der Streutellerneigung zu entnehmen, so daß es bedingt durch die jeweiligen Streuguteigenschaften zu keinem exakten Verteilen der Düngemittelpartikel auf der zu bestreuenden Fläche kommt da eine zu große Streutellerneigung zwangsweise zu einer negativen Beeinflussung des Streubildes führt. Die jeweiligen Streuguteigenschaften der auszustreuenden Materialien bleiben unberücksichtigt. Ein Verschwenken der Streuteller dient nur zum Einstellen der gewünschten Streurichtung und Streubreite. Eine bewußte Verkürzung der nach hinten abgeschleuderten Düngemittelpartikel ist nicht Bestandteil der hier offenbarten Streuvorrichtung. Erst durch die erfindungsgemäßen Maßnahmen gelangt in völlig unerwarteter und überraschender Weise zur Lösung der gestellten Aufgabe.

Weiterhin ist erfindungsgemäß vorgesehen, daß für die Spätdüngung die Streuscheiben mit einer geringeren Neigung als bei der Normaldüngung oder etwa horizontal eingestellt sind. Hierbei ist vorgesehen, daß beim Spätdüngen das Abwerfen der Düngemittelpartikel nach hinten-oben oder in horizontler Richtung durch Zurücknahme der Neigung der Schleuderscheiben oder Einsatz von Schwenkschaufeln oder Schaufeln, die nach oben gerichtete Teile oder Führungsflächen aufweisen, realisiert wird.

Hierdurch ergibt sich wie bei der Normaldüngung, bei der die Düngemittelpartikel derart von den geneigten Streuorganen abgeschleudert werden, daß sie direkt auf die zu bestreuende Oberfläche gerichtet sind, auch der entscheidende Vorteil der nach hinten verkürzten Wurfweite der Düngemittelpartikel, wobei bei der Spätdüngung das gesamte Streubild derart angehoben wird, daß ein "weiches" Auftreffen der Düngerpartikel auf die Getreidehalme oder Ähren erreicht wird, weil die Geschwindigkeit der Düngemittelpartikel besser abgebremst wird und es zu keinem Ährentaubschießen kommt. Somit werden also die sich bei der Normaldüngung durch das nach hinten Verkürzen der Wurfweite der Streupartikel ergebenen Vorteile auch auf die Spätdüngung übertragen.

In einer weiteren Ausführung ist erfindungsgemäß vorgesehen, daß vier oder mehr Streuscheiben vorgesehen sind, wobei weiter nach außen streuenden Scheiben geneigt und die in der Streubildmitte arbeitenden Streuscheiben nicht oder weniger geneigt sind. Hierdurch wird erreicht, daß die von den äußeren Streuscheiben abgeschleuderten Düngemittelpartikel nicht zu weit nach vorne geschleudert werden und sich über die gesamte Streubreite des Schleuderdüngerstreuers ein gleichmäßiges Streubild beinach hinten verkürzter Wurfweite der Streupartikel ergibt.

In einer weiteren Ausführungsform ist erfindungsgemäß vorgesehen, daß vier oder mehr Streuscheiben vorgesehen sind, welche sämtlich nach hinten geneigt sind.

In einer besonders bevorzugten Ausführungsform ist erfindungsgemäß vorgesehen, daß die Schleuderscheibenachse um etwa 5 bis 15° zur Senkrechten nach hinten geneigt ist. Dieser Neigungsbereich der Schleuderscheibenachse gewährleistet, daß die von den Schleuderscheiben abgeschleuderten Düngemittelpartikel ein optimales Streubild bei nach hinten verkürzter Wurfweite der Streupartikel erzeugen.

Die Erfindung sieht weiterhin vor, daß die Bodenplatte des Vorratsbehälters, in welcher die Auslauföffnung angeordnet ist, zumindest annähernd parallel zur Schleuderscheibenebene angeordnet ist. Hierdurch wird gewährleistet, daß der aus der Auslauföffnung des Vorratsbehälter herausrieselnde Düngemittelstrom auf kürzestem Wege auf die Schleuderscheibe auftrifft, so daß immer gewährleistet ist, daß sich ein symmetrisches Streubild gleichmäßiger Streustärke über die gesamte seitliche Wurfweite des Schleuderdüngerstreuers ergibt.

In einer anderen Ausführungsform ist erfindungsgemäß vorgesehen, daß zwischen der Bodenplatte des Vorratsbehälters, in welcher die Auslauföffnung angeordnet ist und der Schleuderscheibe eine Vorrichtung vorgesehen ist, daß mittels dieser Vorrichtung die Aufgabefläche des Düngers auf der Schleuderscheibe ein-und verstellbar ist. Hierbei kann die Vorrichtung als trichterförmige Rutsche oder andersartig ausgebildetes Leitelement ausgebildet sein, um die aus der Auslauföffnung des Vorratsbehälters herausrieselnden Düngemittelpartikel auf kürzestem Wege auf die Schleuderscheibe zuleiten.

Des weiteren berücksichtigt die erfindungsgemäße Ausführungsform, daß die Lage der Schleuderscheibenachse ein- und/oder verstellbar ist. Infolge dieser Maßnahme läßt sich der Schleuderdüngerstreuer auf einfachste Weise von der Normaldüngung für die Spätdüngung umrüsten. Hierbei ist vorgesehen, daß für die Spätdüngung die Streuscheiben mit einer geringeren Neigung als bei der Normaldüngung oder etwa horizontal eingestellt sind.

In einer anderen Ausführungsform ist erfindungsgemäß vorgesehen, daß die Schleuderscheibenachse der bei Normaldüngung geneigten Schleuderscheiben beim Einsatz des Schleuderdüngerstreuers zur sog. Spätdüngung eine etwa senkrechte Lage einnimmt, wobei in bekannter Weise für die Spätdüngung zusätzlich Schwenkschaufeln oder Scheiben mit weiter nach oben gerichteten Schaufeln oder Schaufeln mit weiter nach oben gerichteten Abwurfflächen verwendet werden.

Weitere Einzelheiten der Erfindung sind der Beispielsbeschreibung und den Zeichnungen zu entnehmen. Hierbei zeigt

Fig. 1 den in erfindungsgemäßer Weise ausgebildeten Zentrifugaldüngerstreuer in Prinzipdarstellung und in der Seitenansicht,

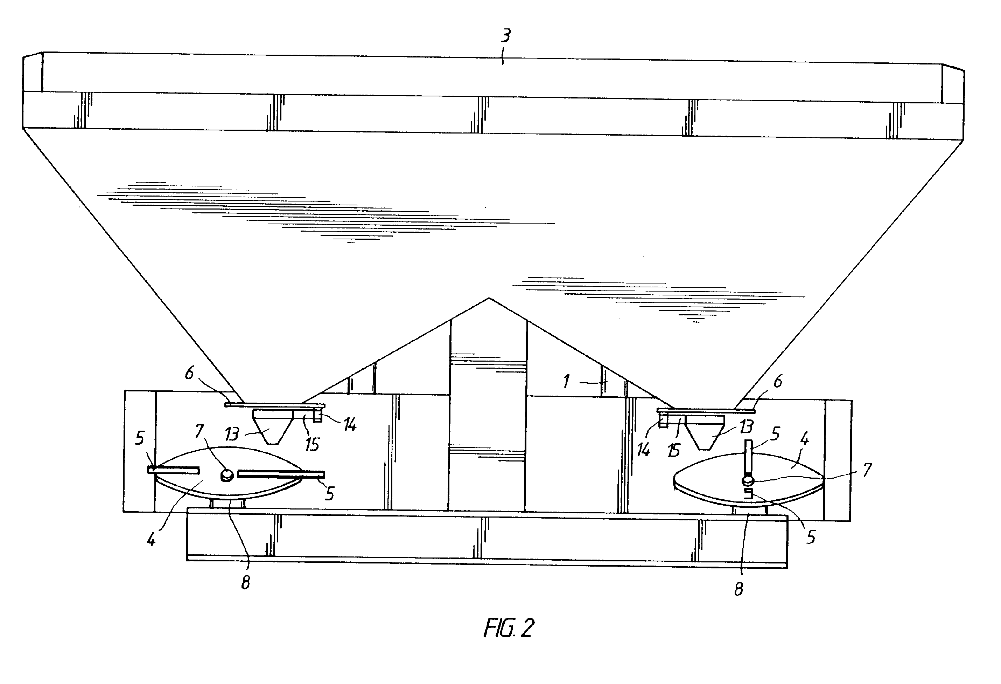

Fig. 2 den Schleuderdüngerstreuer gemäß Fig. 1 in der Ansicht von hinten,

Fig. 3 einen anderen in erfindungsgemäßer Weise ausgebildeten Schleuderdüngerstreuer mit vier Streuscheiben, wobei alle Streuscheiben nach hinten geneigt sind,

Fig. 4 einen weiteren Schleuderdüngerstreuer mit vier Streuscheiben, wobei die beiden mittleren Streuscheiben annähernd senkrecht angeordnet sind und

Fig. 5 einen weiteren in erfindungsgemäßer Weise ausgerüsteten Schleuderdüngerstreuer, wobei die Bodenplatte des Vorratsbehälters annähernd parallel zur Schleuderscheibenebene angeordnet ist, in der Seitenansicht.

Der Schleuderdüngerstreuer weist den Rahmen 1, an dem die Dreipunktkupplungselemente 2 angeordnet sind, den Vorratsbehälter 3 sowie die Schleuderscheiben 4 mit den Wurfelementen 5 auf.

Im unteren Bereich des Vorratsbehälters 3 ist jeweils die Bodenplatte 6, in der sich die bekannte und nicht näher dargestellte Auslauföffnung befindet, angeordnet. Die Öffnungsweite dieser Auslauföffnung läßt sich in bekannter Weise mittels eines Schiebers in unterschiedliche Öffnungsweiten einstellen. Die Schleuderscheiben 4 sind jeweils leicht lösbar auf den Schleuderscheibenantriebswellen 7 befestigt, so daß sie leicht gegen andere Schleuderscheiben austauschbar sind. Die jeweilige Schleuderscheibenantriebswelle 7 ragt aus dem Winkelgetriebe 8 heraus, wobei der Antrieb der Winkelgetriebe 8 mittels einer Gelenkwelle von der Zapfwelle eines den Schleuderdüngerstreuer tragenden Ackerschleppers erfolgt. Die Winkelgetriebe 8 sind derart an dem unteren Querträger 9 des Rahmens 1 gelagert, daß sie sich um die Schwenkachse 10 in ihrer Neigung verstellen lassen. Durch Verschwenken der Winkelgetriebe 8 um die Schwenkachse 10 lassen sich die Schleuderscheiben 4 in ihrer Neigung zur Bodenoberfläche im Bereich von 5 bis 15° derart verstellen, daß sie nach hinten geneigt sind. Die jeweilige Lage des Winkelgetriebes 8 läßt sich mittels des Befestigungselementes 11 innerhalb des Langloches 12 einstellen. Hierbei kann es durchaus möglich sein, daß die beiden nebeneinander angeordneten Schleuderscheiben 4 derart miteinander verbunden sind, daß sie sich gemeinsam um die Schwenkachse 10 verschwenken lassen.

Die sich im Vorratsbehälter 3 befindlichen Düngemittel werden den Schleuderscheiben 4 über die sich in den Bodenplatten 6 befindlichen Auslauföffnungen zugeführt, wobei der aus der Auslauföffnung des Vorratsbehälters 3 herausrieselnde Düngemittelstrom die Auslaufrutsche 13 passiert, bevor er auf die Schleuderscheibe 4 auftrifft. Diese Auslaufrutschen 13 sind jeweils um die senkrecht zueinander angeordneten Drehachsen 14 und 15 in allen Richtungen verstellbar, so daß sich der Aufgabepunkt des aus dem Vorratsbehälter 3 über die Auslauföffnung herausrieselnden Düngemittelstromes auf die Schleuderscheibe 4 mittels der Auslaufrutsche 13 exakt einstellen läßt, wodurch den unterschiedlichen Streustoffeigenschaften der jeweils auszustreuenden Düngemittel Rechnung getragen wird und die Düngemittel so in gleichmäßiger Streustärke über die gesamte seitliche Wurfweite des Schleuderdüngerstreuers verteilt werden. Durch die Neigung der Schleuderscheiben 4 wird die nach hinten gerichtete Wurfweite der Düngerpartikel entscheidend verringert, so daß besonders bei großen Arbeitsbreiten eine wesentliche Reduzierung der Windeinflüsse auf die auszustreudenden Düngerpartikel erreicht wird, da die Düngerpartikel nicht vom Wind abgetrieben werden.

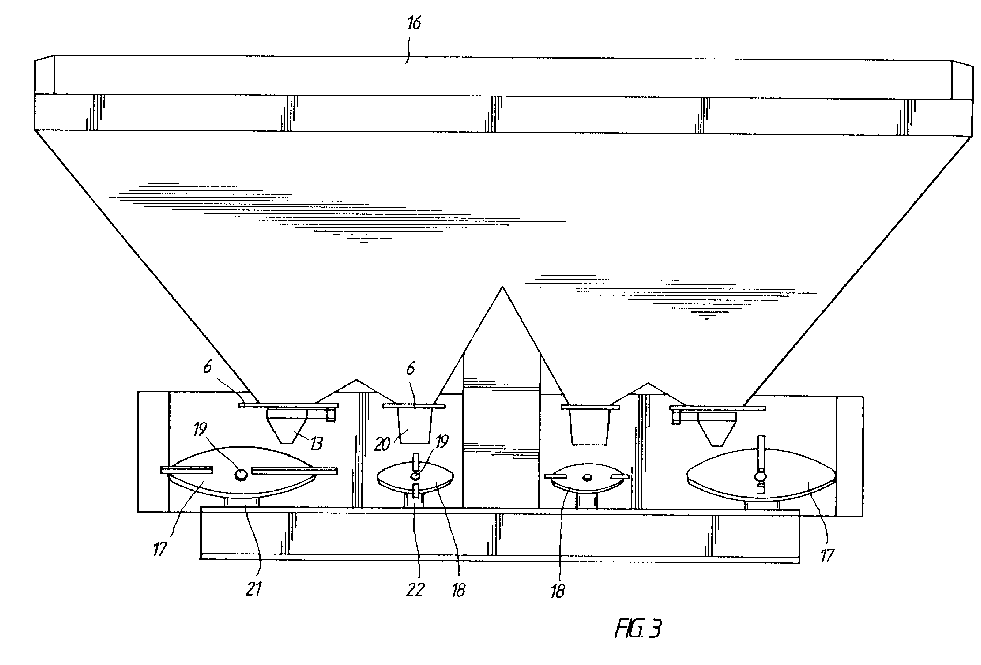

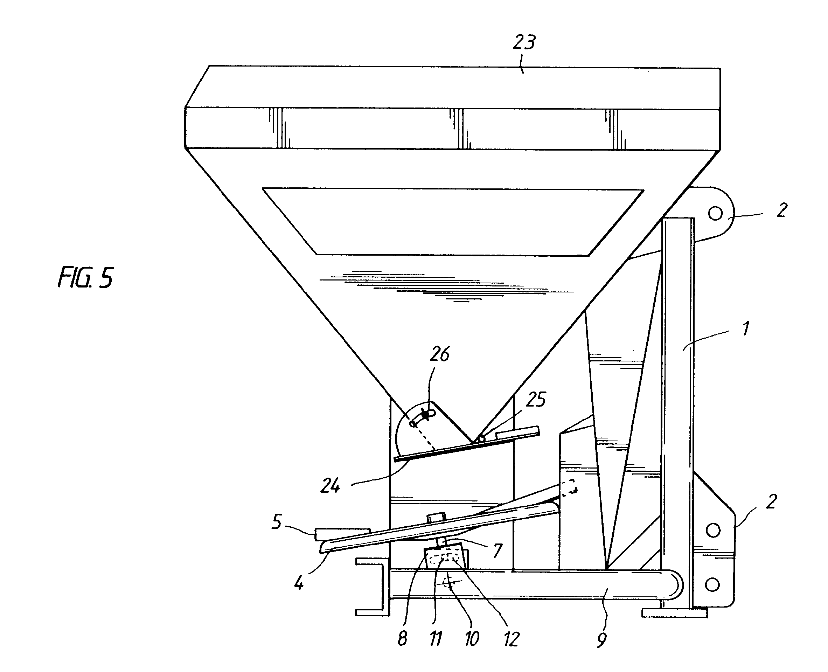

Die Fig. 3 zeigt einen anderen Schleuderdüngerstreuer mit einem Vorratsbehälter 16, der als Vier-Scheibenstreuer ausgebildet ist und in seinem unteren Bereich die beiden äußeren Schleuderscheiben 17 und die inneren Schleuderscheiben 18 aufweist. Diese Schleuderscheiben 17 und 18 sind leicht lösbar auf den Schleuderscheibenantriebswellen 19 befestigt und können jederzeit gegen anders ausgebildete Schleuderscheiben ausgewechselt werden. Die Schleuderscheiben 17 und 18 sind jeweils nach hinten geneigt, wobei die beiden mittleren Schleuderscheiben 18 eine etwas geringere Neigung als die beiden äußeren Schleuderscheiben 17 aufweisen. Den Schleuderscheiben 17 und 18 werden die sich im Vorratsbehälter 16 befindlichen Düngemittel ebenfalls über in den Bodenplatten 6 angeordneten, bekannten Auslauföffnungen mittels der ein- und verstellbaren Auslaufrutschen 13 und 20 zugeführt. Durch die unterschiedliche Neigung der Schleuderscheiben 17 und 18 wird erreicht, daß die von diesen Schleuderscheiben 17 und 18 abgeschleuderten Düngemittel gleichmäßig über die seitliche Wurfweite des Schleuderdüngerstreuers verteilt werden, wobei die Neigung der Schleuderscheiben die Wurfweite der Streupartikel nach hinten verkürzt.

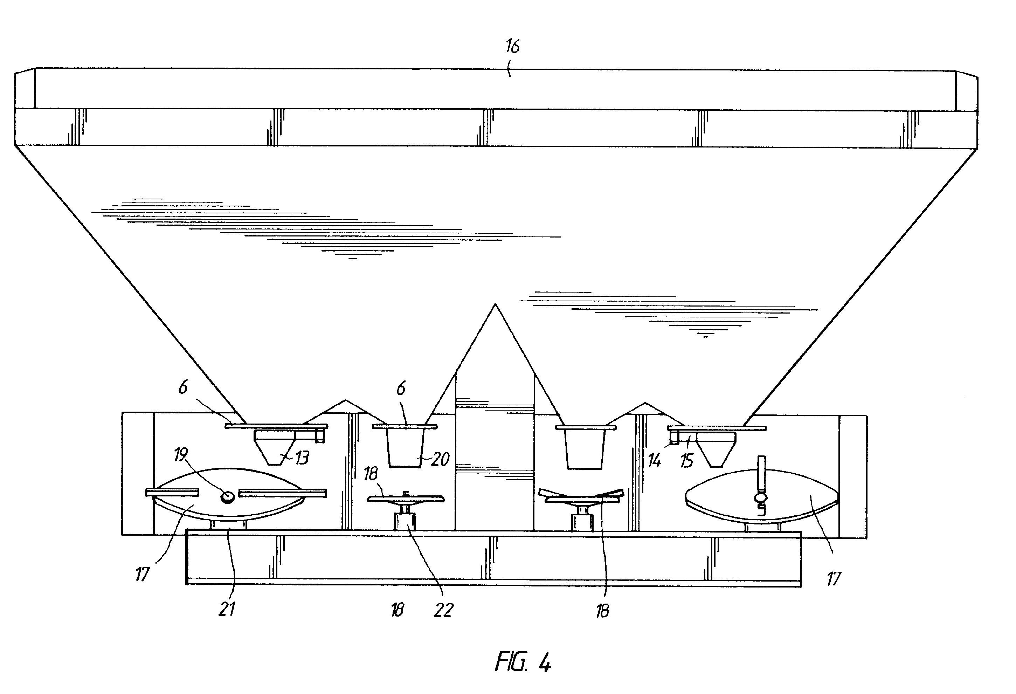

Die Fig. 4 zeigt den Schleuderdüngerstreuer gemäß Fig. 3, wobei die Schleuderscheibenantriebswellen 19 der beiden mittleren Schleuderscheiben 18 senkrecht angeordent sind. Das Verstellen der Winkelgetriebe 21 und 22 der Schleuderscheiben 17 und 18 kann sowohl getrennt voneinander als auch zusammen erfolgen. Werden die einzelnen Winkelgetriebe 21 und 22 zusammen verstellt, läßt sich die Neigung der Schleuderscheiben 17 und 18 auf einfachste Weise mit einem Handgriff zusammen verändern.

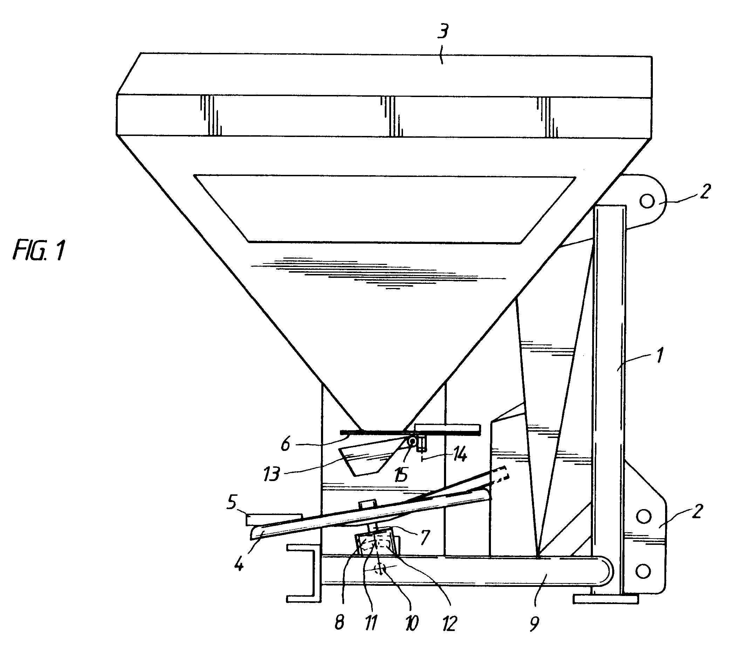

Die Fig. 5 zeigt einen Schleuderdüngerstreuer ähnlich dem Schleuderdüngerstreuer gemäß Fig. 1. Bei diesem Schleuderdüngerstreuer befindet sich im untersten Bereich des Vorratsbehälters 23 die ein- und verstellbare Bodenplatte 24, in der sich die in verschiedenen Öffnungsweiten einstellbare Auslauföffnung befindet. Diese Bodenplatte 24 läßt sich um die Schwenkachse 25 derart verschwenkten, wobei die jeweilige Neigung der Bodenplatte 24 an dem Befestigungselement 26 einstellbar ist. Die jeweilige Neigung der Bodenplatte 24 richtet sich nach der jeweiligen Neigung der Schleuderscheiben 4, wobei diese beiden Bauteile 4 und 24 annähernd parallel zueinander eingestellt werden, wodurch die aus der Auslauföffnung der Bodenplatte 24 herausrieselnden Düngemittelpartikel auf dem kürzesten Weg zu der jeweiligen Schleuderscheibe 4 gelangt.

**Patentansprüche**

1. Schleuderdüngerstreuer, der insbesondere als an den Dreipunktkraftheber eines Ackerschleppers anbaubarer Schleuderstreuer ausgebildet ist, mit zumindest einem Vorratsbehälter (3,16), einem Rahmen (1,9) und zumindest zwei um etwa aufrechte Achsen rotierend angetriebenen Schleuderscheiben (4,17,18), denen das auszubringende Material, insbesondere Düngemittel, über einstellbare bzw. regelbare Dosiereinrichtungen zugeführt wird, wobei die Schleuderscheiben (4,17,18) oder einige der Schleuderscheiben (4,17,18) um einen Winkel geneigt einstellbar sind, wobei, die Schleuderscheiben (4,17,18) oder einige der Schleuderscheiben bzw. deren Rotationsachse (7,19) um einen Winkel nach hinten geneigt einstellbar sind, wobei durch die Neigung der Schleuderscheiben (4,17,18) die Wurfweite der Streupartikel nach hinten verkürzt wird, dadurch gekennzeichnet, daß die die Schleuderscheiben (4,17,18) tragenden Winkelgetriebe (8,21,22) um eine quer zur Fahrtrichtung verlaufende Schwenkbachse (10) verschwenkbar am Rahmen (1,9) angeordnet sind, wobei die Schwenkachse (10) und die aufrechte Welle (7) des Winkelgetriebes (8,21,22) sich kreuzen.

2. Schleuderstreuer nach Anspruch 1, dadurch gekennzeichnet, daß für die Spätdüngung die Streuscheiben (4,17,18) mit einer geringeren Neigung als bei der Normaldüngung oder etwa horizontal eingestellt sind.

3. Schleuderstreuer nach Anspruch 1 oder 2, dadurch gekennzeichnet, daß beim Spätdüngen das Abwerfen der Düngemittelpartikel nach hinten-oben oder in horizontaler Richtung durch Zurücknahme der Neigung oder Einsatz von Schwenkschaufeln oder Schaufeln (5), die nach oben gerichteten Teile oder Führungsflächen aufweisen, realisiert wird.

4. Schleuderdüngerstreuer nach Anspruch 1, dadurch gekennzeichnet, daß vier oder mehr Schleuderscheiben (17,18) vorgesehen sind, wobei die weiter nach außen streuenden Scheiben (17) geneigt und die in der Streubildmitte arbeitenden Streuscheiben (18) nicht oder weniger geneigt sind.

5. Schleuderdüngerstreuer nach Anspruch 1, dadurch gekennzeichnet, daß vier oder mehr Streuscheiben (17,18) vorgesehen sind, wobei die in der Streubildmitte arbeitenden Streuscheiben (18) geneigt und die weiter nach außen streuenden Scheiben (17) nicht oder weniger geneigt sind.

6. Schleuderstreuer nach Anspruch 1, dadurch gekennzeichnet, daß vier oder mehr Streuscheiben (17,18) vorgesehen sind, welche sämtlich nach hinten geneigt sind.

7. Schleuderdüngerstreuer nach Anspruch 1, dadurch gekennzeichnet, daß die Schleuderscheibenachse (7,19) um etwa 5 bis 15° zur Senkrechten nach hinten geneigt ist.

8. Schleuderdüngerstreuer nach Anspruch 1, dadurch gekennzeichnet, daß die Bodenplatte (6,24) des Vorratsbehälters (3,23), in welcher die Auslauföffnung angeordnet ist, zumindest annähernd parallel zur Schleuderscheibenebene angeordnet ist.

9. Schleuderstreuer nach Anspruch 1, dadurch gekennzeichnet, daß zwischen der Bodenplatte (6,24) des Vorratsbehälters, (3,16) in welcher die Auslauföffnung angeordnet ist und der Schleuderscheibe (4,17,18) eine Vorrichtung (13,20) vorgesehen ist, daß mittels dieser Vorrichtung (13,20) die Aufgabefläche des Düngers auf

EP 0 327 941 B1

der Schleuderscheibe ein- und verstellbar ist.

10. Schleuderscheibe nach Anspruch 9, dadurch gekennzeichnet, daß die Vorrichtung (13,20) als trichterförmige Rutsche oder andersartig ausgebildetes Leitelement ausgebildet ist.

11. Schleuderstreuer nach Anspruch 1 oder 2, dadurch gekennzeichnet, daß die Lage der Schleuderscheibenachse (7,19) ein- und/oder verstellbar ist.

12. Schleuderstreuer nach Anspruch 1, dadurch gekennzeichnet, daß die Schleuderscheibenachse (7,19) der bei Normaldüngung geneigten Schleuderscheiben (4,17,18) beim Einsatz des Schleuderdüngerstreuers zur sog. Spätdüngung eine etwa senkrechte Lage einnimmt.

13. Schleuderdüngerstreuer nach Anspruch 1, dadurch gekennzeichnet, daß in bekannter Weise für die Spätdüngung zusätzlich Schwenkschaufeln oder Scheiben mit weiter nach oben gerichteten Schaufeln oder Schaufeln mit weiter nach oben gerichteten Abwurfflächen verwendet werden.


**Claims**

1. Centrifugal fertilizer broadcaster, which is more especially a centrifugal broadcaster which is attachable to the three-point hydraulic lift of a tractor, including at least one hopper (3,16), a frame (1, 9) and at least two centrifugal discs (4, 17, 18), which are rotatably driven about substantially upright axes and to which the material to be distributed, more especially fertilizer, is supplied via the intermediary of adjustable or controllable metering arrangements, the centrifugal discs (4, 17, 18) or some of the centrifugal discs (4, 17, 18) being adjustable so as to be inclined at an angle, the centrifugal discs (4, 17, 18) or some of the centrifugal discs or their rotary axes (7, 19) being adjustable so as to be inclined rearwardly at an angle, and the casting range for the particles to be scattered being shortened rearwardly by the inclination of the centrifugal discs (4, 17, 18), characterised in that the mitre gears (8, 21, 22) carrying the centrifugal discs (4, 17, 18) are disposed on the frame (1, 9) so as to be pivotable about a pivotal axis (10), which extends transversely relative to the direction of travel, the pivotal axis (10) and the upright shaft (7) of the mitre gear (8, 21, 22) intersecting with each other.

2. Centrifugal broadcaster according to claim 1, characterised in that, for late fertilizing, the centrifugal discs (4, 17, 18) are set to a smaller inclination than for normal fertilizing, or they are set substantially horizontally.

3. Centrifugal broadcaster according to claim 1 or 2, characterised in that, for late fertilizing, the fertilizer particles are discharged rearwardly and upwardly or in a horizontal direction by removing the inclination or using pivotal vanes or shovels (5), which have upwardly orientated members or guide faces.

4. Centrifugal fertilizer broadcaster according to claim 1, characterised in that four or more centrifugal discs (17, 18) are provided, the discs (17) which disperse further outwardly being inclined, and the dispersing discs (18) which operate in the centre of the dispersion pattern, not being inclined or being less inclined.

5. Centrifugal fertilizer broadcaster according to claim 1, characterised in that four or more dispersing discs (17, 18) are provided, the dispersing discs (18) which operate in the centre of the dispersion pattern being inclined, and the discs (17) which disperse further outwardly not being inclined or being less inclined.

6. Centrifugal broadcaster according to claim 1, characterised in that four or more dispersing discs (17, 18) are provided, which are all rearwardly inclined.

7. Centrifugal fertilizer broadcaster according to claim 1, characterised in that the centrifugal disc axis (7, 19) is rearwardly inclined at substantially 5 to 15° relative to the vertical.

8. Centrifugal fertilizer broadcaster according to claim 1, characterised in that the base plate (6, 24) of the hopper (3, 23), in which the outlet aperture is provided, extends at least approximately parallel to the plane of the centrifugal discs.

9. Centrifugal broadcaster according to claim 1, characterised in that a device (13, 20) is provided between the base plate (6, 24) of the hopper (3, 16), in which the outlet aperture is provided, and the centrifugal disc (4, 17, 18), and in that the loading surface for the fertilizer on the centrifugal disc is settable and adjustable by means of this device (13, 20).

10. Centrifugal disc according to claim 9, characterised in that the device (13, 20) is a funnel-shaped chute or otherwise formed guiding means.

11. Centrifugal broadcaster according to claim 1 or 2, characterised in that the position of the centrifugal disc axis (7, 19) is settable and/or adjustable.

12. Centrifugal broadcaster according to claim 1, characterised in that the centrifugal disc axis (7, 19) of the centrifugal discs (4, 17, 18), which are inclined for normal fertilizing, assumes a substantially vertical position when the centrifugal fertilizer broadcaster is used for so-called late fertilizing.

13. Centrifugal fertilizer broadcaster according to claim 1, characterised in that pivotal shovels, or discs with shovels which are further upwardly orientated, or shovels with further upwardly orientated discharge faces are used in known manner for late fertilizing.

6

**Revendications**

1. Epandeur centrifuge destiné notamment à être monté sur le dispositif d'attelage en trois points d'un tracteur agricole, comportant un réservoir d'alimentation (3, 16), un châssis (1, 9) et au moins deux disques d'épandage (4, 17, 18) entraînés en rotation sur des axes sensiblement verticaux, et qui reçoivent les produits à distribuer notamment des engrais par des dispositifs de dosage réglables ou commandés, les disques d'épandage (4, 17, 18) ou certains de ces disques (4, 17, 18) peuvent être réglés suivant un angle et les disques d'épandage (4, 17, 18) ou certains de ces disques ou leur axe de rotation (7, 19) se règlent en inclinaison vers l'arrière suivant un certain angle et l'inclinaison des disques d'épandage (4, 17, 18) raccourcit la portée de projection des particules d'engrais vers l'arrière, épandeur caractérisé en ce que les transmissions d'angle (8, 21, 22) portant les disques d'épandage (4, 17, 18) peuvent pivoter sur un axe de pivotement (10) transversal à la direction de déplacement et pivotant sur le châssis (1, 9), l'axe de pivotement (10) et l'axe vertical (7) de la transmission d'angle (8, 21, 22) se coupant.

2. Epandeur centrifuge selon la revendication 1, caractérisé en ce que pour l'épandage de couverture, les disques d'épandage (4, 17, 18) se règlent suivant une inclinaison plus faible que pour l'épandage normal ou encore de façon sensiblement horizontale.

3. Epandeur centrifuge selon la revendication 1 ou 2, caractérisé en ce que pour l'épandage de couverture, la projection des particules d'engrais se fait vers l'arrière et vers le haut ou dans la direction horizontale en réduisant l'inclinaison ou en utilisant des pales pivotantes ou des pales (5) qui comportent des parties ou des surfaces de guidage dirigées vers le haut.

4. Epandeur centrifuge selon la revendication 1, caractérisé en ce qu'il comporte au moins quatre disques d'épandage (17, 18), les disques les plus à l'extérieur (17) étant inclinés alors que les disques d'épandage (18) travaillant au milieu de l'image d'épandage n'étant pas inclinés ou étant moins inclinés que les autres.

5. Epandeur centrifuge selon la revendication 1, caractérisé par au moins quatre disques d'épandage (17, 18) et les disques d'épandage (18) travaillant au milieu de l'image d'épandage étant inclinés alors que les autres disques d'épandage (17) plus à l'extérieur n'étant pas inclinés ou étant moins inclinés.

6. Epandeur centrifuge selon la revendication 1, caractérisé en ce qu'il comporte au moins quatre disques d'épandage (17, 18) tous inclinés vers l'arrière.

7. Epandeur centrifuge selon la revendication 1, caractérisé en ce que l'axe des disques d'épandage (7, 19) est incliné vers l'arrière d'un angle de 5 à 15° par rapport à la direction verticale.

8. Epandeur centrifuge selon la revendication 1, caractérisé en ce que la plaque de fond (6, 24) du réservoir d'alimentation (3, 23) comportant l'orifice de sortie est prévue au moins de façon pratiquement parallèle au plan des disques d'épandage.

9. Epandeur centrifuge selon la revendication 1, caractérisé en ce qu'entre la plaque de fond (6, 24) du réservoir d'alimentation (3, 16) comportant l'orifice de sortie et le disque d'épandage (4, 17, 18), il est prévu un dispositif (13, 20) qui permet de régler et de commander la surface d'arrivée de l'engrais sur les disques d'épandage.

10. Epandeur centrifuge selon la revendication 9, caractérisé en ce que le dispositif (13, 20) est en forme de glissière en entonnoir ou autre élément de guidage.

11. Epandeur centrifuge selon la revendication 1 ou 2, caractérisé en ce que la position de l'axe (7, 19) des disques d'épandage est réglable ou susceptible d'être commandée.

12. Epandeur centrifuge selon la revendication 1, caractérisé en ce que l'axe de disques (7, 19) des disques d'épandage (4, 17, 18) inclinés pour l'épandage normal est mis dans une position sensiblement verticale pour utiliser l'épandeur centrifuge pour l'épandage dit de couverture.

13. Epandeur centrifuge selon la revendication 1, caractérisé en ce que de manière connue, pour l'épandage de couverture, on a des pales pivotantes supplémentaires ou des disques avec des pales plus relevées ou des pales ayant des surfaces d'éjection plus relevées.

FIG. 1

FIG. 2

EP 0 327 941 B1

FIG.3

FIG. 5

FIG. 4

EP 0 327 941 B1